# EUROPÄISCHE PATENTSCHRIFT

(11) **EP 1 600 669 B1**
(45) Veröffentlichungstag und Bekanntmachung des Hinweises auf die Patenterteilung: **10.01.2007**
(21) Anmeldenummer: 04012299.6
(22) Anmeldetag: 25.05.2004
(51) Int. Cl.: F16H 61/04, F15B 11/20

(54) **Hydraulische Steuereinrichtung und Verfahren zur Ansteuerung zweier Aktuatoren**
Hydraulic control device and method of controlling two actuators
Dispositif de commande hydraulique et procédé pour la commande de deux vérins

(43) Veröffentlichungstag der Anmeldung: 30.11.2005
(73) Patentinhaber: BorgWarner Inc., Auburn Hills MI 48326 (US)
(72) Erfinder: Ebinger, Günter, 76684 Ostringen (DE); Jung, Micheal, 68782 Brühl (DE); Schmidt, Oliver, 67346 Speyer (DE)
(74) Vertreter: Patentanwälte Westphal, Mussgnug & Partner

(56) Entgegenhaltungen:
- EP-A- 0 802 355
- DE-A- 10 155 050
- DE-A- 19 821 164
- DE-A- 19 856 297
- DE-A- 19 858 543
- PATENT ABSTRACTS OF JAPAN Bd. 0070, Nr. 44 (M-195), 22. Februar 1983 (1983-02-22) & JP 57 192662 A (TOYO KOGYO KK), 26. November 1982 (1982-11-26)

## Beschreibung

Die Erfindung betrifft eine hydraulische Steuereinrichtung zur hydraulischen Ansteuerung eines ersten druckgesteuerten Aktuators und eines zweiten druckgesteuerten Aktuators, insbesondere eines ersten Kupplungsaktuators und eines zweiten Kupplungsaktuators nach dem Oberbegriff des Patentanspruchs 1 sowie und ein Verfahren zur hydraulischen Ansteuerung eines ersten druckgesteuerten Aktuators und eines zweiten druckgesteuerten Aktuators, insbesondere eines ersten Kupplungsaktuators und eines zweiten Kupplungsaktuators nach dem Oberbegriff des Patentanspruchs 9.

Die überwiegende Anzahl von Automatikgetrieben herkömmlicher Bauart weist als Anfahrelement einen sogenannten hydrodynamischen Wandler auf, um ein Kraftfahrzeug aus dem Stand in Bewegung setzen zu können. Da mittlerweile die Ansprüche der Fahrzeugführer an den Kraftstoffverbrauch und an die Fahrbarkeit erheblich gestiegen sind, wurde es erforderlich, in jedem Bewegungszustand des Kraftfahrzeugs Steuer- und/oder Regeleingriffe zuzulassen. Bei Automatikgetrieben der vorstehend beschriebenen Art war dies nur bedingt möglich. Daher wurden andere Steuerungs- und/oder Regelkonzepte für Automatikgetriebe entwickelt.

Heutige Automatikgetriebe verfügen in der Regel über einen hydrodynamischen Drehmomentwandler als Anfahrelement. Daneben gibt es einige Anwendungen bei denen der Drehmomentwandler durch eine Kupplung als Anfahrelement ersetzt ist. Diese Kupplung wird hydraulisch angesteuert/geregelt und gleichzeitig hydraulisch gekühlt. Gangwechsel werden bei den gestuften Getrieben durch mehrere hydraulisch schaltbare Kupplungen oder Bremsen realisiert.

Bei einem Doppelkupplungsgetriebe neuerer Bauart werden die Funktionen Anfahren und Schalten durch zwei Kupplungen abgedeckt. Beispielhaft sei auf die in den Offenlegungsschriften DE 198 21 164 A1 oder DE 198 58 543 A1 beschriebenen Doppelkupplungsgetriebe hingewiesen. Die Kupplungsaktuatoren dieser Kupplungen werden mit Hilfe von Magnetventilen hydraulisch angesteuert. Mit diesen Magnetventilen lassen sich stufenlos beliebige Ansteuerdrücke für die Kupplungsaktuatoren einstellen.

Derartige Magnetventile sind jedoch teuer.

Die Aufgabe der Erfindung besteht nunmehr darin, eine hydraulische Steuereinrichtung bzw. ein entsprechendes Verfahren zur Ansteuerung zweier druckgesteuerter Aktuatoren bereitzustellen, welche bzw. welches billiger ist.

Diese Aufgabe wird bei einer gattungsgemäßen Steuereinrichtung durch die Merkmale des kennzeichnenden Teils des Patentanspruchs 1 sowie bei einem gattungsgemäßen Verfahren durch die Merkmale des kennzeichnenden Teils des Patentanspruchs 9 gelöst.

Vorteilhafte Ausführungen und Weiterbildungen der Erfindung sind in den Unteransprüchen angegeben.

Die Erfindung geht von einer hydraulischen Steuereinrichtung an sich bekannter Art aus, bei dem ein erstes Druckventil, vorzugsweise ein erstes Druckregelventil, und ein zweites Druckventil, vorzugsweise ein Druckregelventil, vorgesehen sind.

Das erste Druckventil weist einen Eingang auf, an dem ein hydraulischer System- oder Hauptdruck anliegt. Das erste Druckventil stellt (bspw. elektrisch angesteuert) an seinem Ausgang einen ersten hydraulischen Betätigungsdruck ein. Mit diesem ersten Betätigungsdruck wird der erste Aktuator hydraulisch angesteuert.

In ähnlicher Weise weist das zweite Druckventil einen Eingang auf, an dem der hydraulische Hauptdruck anliegt. Das zweite Druckventil stellt an seinem Ausgang einen zweiten hydraulischen Betätigungsdruck ein. Mit diesem zweiten Betätigungsdruck wird der zweite Aktuator angesteuert.

Geht man davon aus, dass das erste Druckventil in üblicher Weise (bspw. elektrisch, vgl. vorstehend) angesteuert wird, so ist nunmehr gemäß der Erfindung vorgesehen, dass die Ansteuerung des zweiten Druckventils über den am Ausgang des ersten Druckventils anliegenden ersten (hydraulischen) Betätigungsdruck erfolgt.

Geht man von einer aus dem vorstehend genannten Stand der Technik bekannten Ansteuerung der beiden Aktuatoren mittels zweier unabhängig voneinander bestrombarer Magnetventile aus, so sieht die Erfindung demnach vor, ein elektromagnetisch betätigtes Magnetventil, nämlich das zur Betätigung des zweiten Aktuators vorgesehene (zweite) Magnetventil, durch ein druckbetätigtes bzw. druckgesteuertes Ventil zu ersetzen, wobei die Ansteuerung dieses druckgesteuerten (zweiten) Ventils durch den am Ausgang des (ersten) Magnetventils anliegenden Druck erfolgt. Dieses zweite Ventil ist wesentlich billiger, weil es ohne eine zusätzliche Steuerleitung und eine zusätzliche (elektronische) Steuereinrichtung, im vorliegenden Ausführungsbeispiel einen Elektromagneten mit zugehöriger Steuerelektronik für die Bestromung des Elektromagneten, auskommt. Durch geschickte Wahl des Schaltverhaltens des zweiten Ventils bzw. einer Anpassung der Ansteuerung des ersten Ventils lässt sich am Ausgang des zweiten Ventils der gewünschte Ansteuerdruck einstellen.

In besonders vorteilhafter Ausgestaltung der Erfindung ist vorgesehen, dass das zweite Druckventil zum Einstellen des zweiten hydraulischen Betätigungsdrucks zusätzlich von dem Hauptdruck angesteuert wird. In entsprechender Weise weist das zweite Druckventil einen zweiten Steuereingang auf, dem ein zweiter hydraulischer Steuerdruck zum Einstellen des zweiten hydraulischen Betätigungsdrucks zuführbar ist, wobei an dem zweiten Steuereingang der hydraulische Hauptdruck anliegt.

Der zweite Betätigungsdruck am Ausgang des zweiten Druckventils lässt sich dann im einfachsten Fall über das erste Druckventil und die Größe des Hauptdrucks einstellen.

Wenn der Hauptdruck wie aus dem Stand der Technik bekannt ist durch ein Hauptdruck(regel)ventil eingestellt wird, so kann die durch das zweite Druck(regel)ventil erfolgende Ansteuerung des zweiten Aktuators über die beiden anderen Ventile, nämlich das erste Druck(regel)ventil und das Hauptdruck(regel)ventil eingestellt werden.

Eine sehr kostengünstige Steuereinrichtung zur Ansteuerung der beiden Aktuatoren erhält man dann, wenn das erste Druckventil ein Magnetventil ist, das Hauptdruckventil ebenfalls ein Magnetventil ist und das zweite Druckventil ein Schiebeventil (hydraulischer Schieber) ist. Die Magnetventile zeichnen sich durch eine einfache, schnelle und zuverlässige Ansteuerbarkeit aus. Sie sind jedoch teuer. Das Schiebeventil kommt ohne elektronische Ansteuerung aus und ist billig. Da die Ansteuerung über Drücke erfolgt, welche von den beiden anderen Magnetventilen eingestellt werden, ist keine zusätzliche hydraulische Ansteuereinrichtung erforderlich, welche zusätzliche Kosten verursachen würde.

Insbesondere zur Ansteuerung zweier Kupplungsaktuatoren einer Doppelkupplung für ein Automatikgetriebe (aber nicht nur für eine solche) haben sich folgende Verfahren als vorteilhaft herausgestellt:

Bei einer Doppelkupplungseinrichtung, bei der der erste Aktuator im drucklosen Zustand geöffnet ist und der zweite Aktuator im drucklosen Zustand geschlossen ist, ist erfindungsgemäß vorgesehen, dass das zweite Druckventil den zweiten Aktuator mit dem Hauptdruck ansteuert, wenn das zweite Druckventil von dem ersten Druckventil mit dem Hauptdruck angesteuert wird.

Weiterhin ist es vorteilhaft, wenn bei einer derartig ausgebildeten Doppelkupplung der zweite Aktuator von dem zweiten Druckventil drucklos geschaltet wird, wenn das zweite Druckventil von dem ersten Druckventil mit einem Druck unter einem unterhalb des Hauptdrucks liegenden Schwellwert angesteuert wird.

Bei einer Doppelkupplung, bei der der erste Aktuator im drucklosen Zustand geöffnet ist und der zweite Aktuator im drucklosen Zustand geöffnet ist, ist erfindungsgemäß vorgesehen, dass das zweite Druckventil den zweiten Aktuator drucklos schaltet, wenn das zweite Druckventil von dem ersten Druckventil mit dem Hauptdruck angesteuert wird.

Hier ist es weiterhin vorteilhaft, wenn das zweite Druckventil den zweiten Aktautor mit dem Hauptdruck ansteuert, wenn das zweite Druckventil von dem ersten Druckventil mit einem Druck angesteuert wird, der unter einem unterhalb des Hauptdrucks liegenden Schwellwert liegt.

Die Erfindung wird nunmehr anhand der Zeichnung näher beschrieben. Es zeigen:
- Figur 1: einen Hydraulikschaltplan eines ersten Ausführungsbeispiels einer erfindungsgemäßen hydraulischen Steuereinrichtung zur Ansteuerung eines ersten Kupplungsaktuators und eines zweiten Kupplungsaktuators einer Doppelkupplung eines Automatikgetriebes

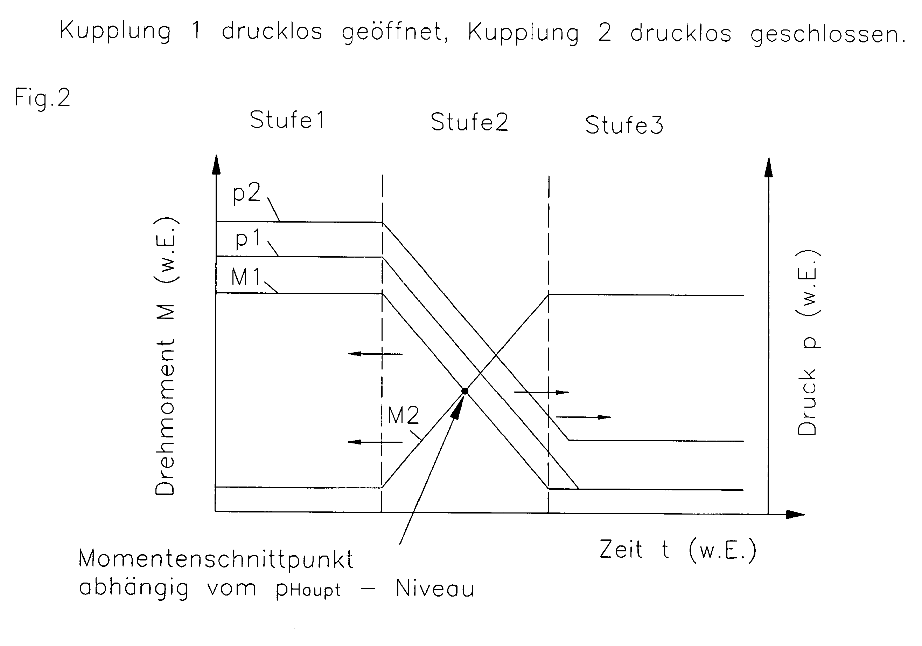

- Figur 2: ein Steuerdiagramm der hydraulischen Steuereinrichtung gemäß der Figur 1
- Figur 3: einen Hydraulikschaltplan eines zweiten Ausführungsbeispiels einer erfindungsgemäßen hydraulischen Steuereinrichtung zur Ansteuerung eines ersten Kupplungsaktuators und eines zweiten Kupplungsaktuators einer Doppelkupplung eines Automatikgetriebes

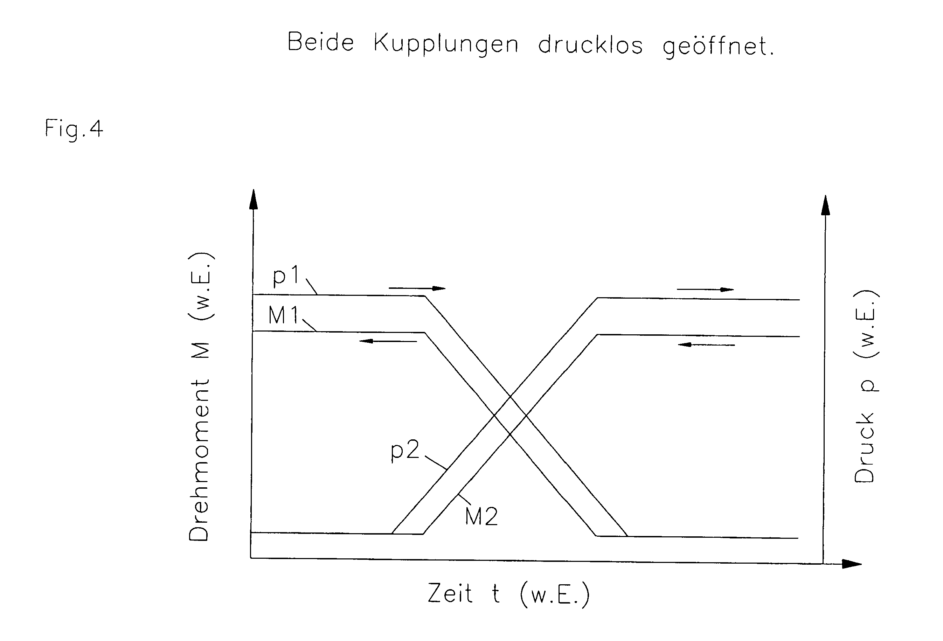

- Figur 4: ein Steuerdiagramm der hydraulischen Steuereinrichtung gemäß der Figur 3

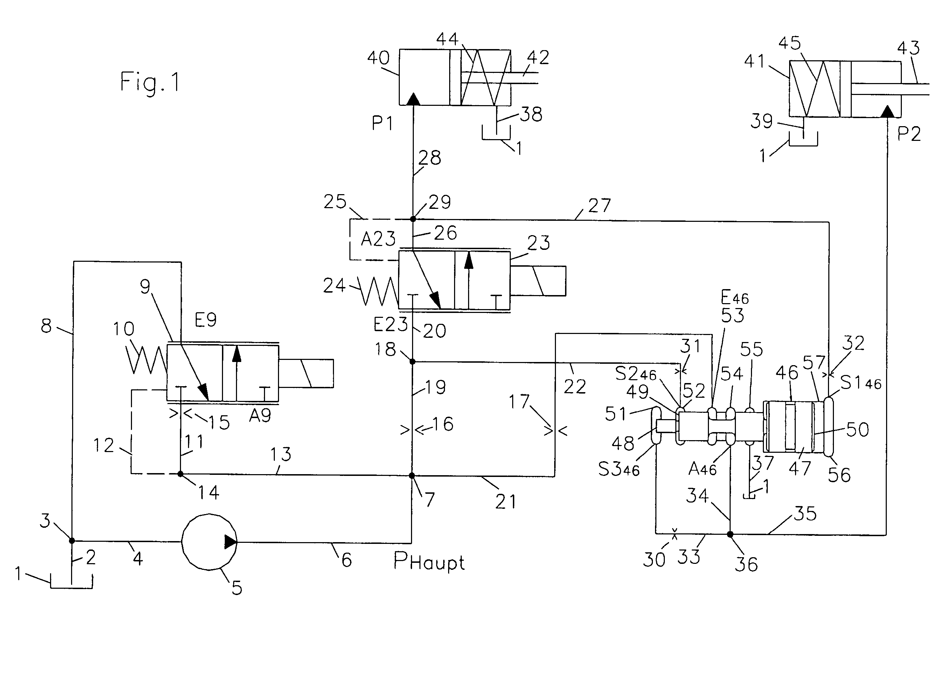

Figur 1 zeigt ein erstes Ausführungsbeispiel einer erfindungsgemäßen hydraulischen Steuereinrichtung zur Ansteuerung eines ersten druckgesteuerten Kupplungsaktuators 40 und eines zweiten druckgesteuerten Kupplungsaktuators 41 einer Doppelkupplung eines Automatikgetriebes.

Die beiden Kupplungsaktuatoren 40, 41 sind durch einfach wirkende Zylinder symbolisiert. Der erste Kupplungsaktuator 40 ist im drucklosen Zustand geöffnet, der zweite Kupplungsaktuator 41 ist im drucklosen Zustand geschlossen. Ein Kolben 42 des ersten Kupplungsaktuators 40 ist demnach entgegen der Kraft einer Feder 44 mittels eines ersten Betätigungsdrucks p₁ in eine geschlossene Stellung verbringbar. In entsprechender Weise ist ein Kolben 43 des zweiten Aktuators 41 entgegen der Kraft einer Feder 45 durch Druckbeaufschlagung mittels eines zweiten Betätigungsdrucks p₂ in eine geöffnete Stellung verbringbar. Der Vollständigkeit halber sind Rohrenden 38, 39 gezeigt, welche mit einem offenen Hydraulikflüssigkeitsbehälter 1 verbunden sind, über die Überdrücke an den Hydraulikflüssigkeitsbehälter 1 abgegeben werden können.

Die eigentliche hydraulische Ansteuereinrichtung umfasst drei Druckregelventile 9, 23 und 46.

Das Druckregelventil 9 stellt das Hauptdruckregelventil dar. Dieses Hauptdruckregelventil 9 (ein elektromagnetisch betätigtes 2/2-Wege-Ventil) ist eingangsseitig (Eingang E₉) über Durchflussleitungen 8, 2 mit einem Hydraulikflüssigkeitsbehälter 1 verbunden. Ausgangsseitig (Ausgang A₉) besteht eine Durchflussleitungsverbindung über die mit einer Drossel 15 versehene Durchflussleitung 11 und Durchflussleitungen 13 und 6 zum Ausgang einer Hydropumpe 5, welche eingangsseitig über eine Durchflussleitung 4 und eine zur Durchflussleitung 2 führende Leitungsverbindung 3 mit dem offenen Hydraulikflüssigkeitsbehälter 1 verbunden ist. Der Ausgang des Hauptdruckregelventils 9 ist ferner über eine Leitungsverbindung 14 und eine Steuerleitung 12 mit einem Steuereingang des Hauptdruckregelventils 9 verbunden.

Dieses elektromagnetisch entgegen der Federkraft einer Feder 10 betätigte 2/2-Wege-Ventil 9 dient zur Einstellung und Regelung (Steuerleitung 12) eines Hauptdrucks p_{Haupt} in einer Hauptdruckleitung, welche im vorliegenden Ausführungsbeispiel durch die Durchflussleitungen 6, 11, 13, 19, 20, 21, 22, gebildet ist. Anstelle dieses 2/2-Wege-Ventils 9 können auch andere zur Regelung des Hauptdrucks p_{Haupt} geeignete Ventile eingesetzt werden. Beispiele hierfür entnimmt man insbesondere der DE 198 58 543 A1 oder der DE 198 56 297 A1.

Zur Ansteuerung des ersten Kupplungsaktuators 40 ist ein Druckregelventil 23 vorgesehen, wie es üblicherweise zur Ansteuerung der Kupplungsaktuatoren einer Doppelkupplung eines Automatikgetriebes verwendet wird (vgl. hierzu insbesondere vorstehend genannte Druckschriften). Ein Eingang E₂₃ dieses elektromagnetisch entgegen der Kraft einer Feder 24 betätigbaren 2/2-Wege-Ventils 23 ist mit der Hauptdruckleitung 6, 11, 13, 19, 20, 21, 22 verbunden. Ein Ausgang A₂₃ dieses elektromagnetisch betätigten 2/2-Wege-Ventils 23 ist in an sich üblicher Weise über entsprechende Durchflussleitungen 26, 28 mit dem ersten Kupplungsaktuator 40 verbunden. Das Ventil 23 ist dazu vorgesehen, angesteuert durch entsprechende Bestromung der Magnetspule des Elektromagnetventils 23, einen über die Steuerleitung 25 geregelten Betätigungsdruck p₁ am ersten Kupplungsaktuator 40 einzustellen.

Anstelle einer gemäß dem Stand der Technik bekannten Verwendung eines elektromagnetisch betätigten 2/2-Wege-Ventils ist erfindungsgemäß ein druckbetätigtes Schiebeventil 46 vorgesehen. Dieses Schiebeventil 46 weist ein Steuergehäuse 57 mit sechs Schlitzen 51, 52, 53, 54, 55 und 56 auf. In dem Steuergehäuse 57 ist ein Kolben 47 zwischen zwei Endstellungen axial verschieblich geführt.

Die Figur 1 zeigt eine erste Endstellung, in der der Kolben 47 seine linke Endposition erreicht hat. Seine rechte Endposition hat der Kolben 47 dann erreicht, wenn die mit dem Bezugszeichen 50 gekennzeichnete Stirnfläche an der rechten Stirnfläche des Steuergehäuses 57 anstößt. Der Kolben 47 weist Kolbenabschnitte auf, welche einen Durchfluss von Hydraulikflüssigkeit zwischen zwei benachbarten Schlitzen 51, 52, 53, 54, 55, 56 ermöglichen oder unterbinden.

Der Schlitz 56 an der rechten Endseite des Steuergehäuses 57 ist über eine Durchflussleitung 27 mit viskositätsunabhängiger Drosselung 32 mit dem Ausgang A₂₃ des ersten Druckventils 23 verbunden (Leitungsverbindung 29). Schlitz 56 stellt einen ersten Steuereingang S1₄₆ des Druckventils 46 dar.

Im vorliegenden Ausführungsbeispiel ist der zweite Schlitz 52 über eine Durchflussleitung 22, in welcher eine viskositätsunabhängige Drosselung 31 angeordnet ist, mit der Hauptdruckleitung 11, 13, 6, 19, 20 verbunden (Leitungsverbindung 18). Schlitz 52 stellt einen zweiten Steuereingang S2₄₆ des Druckventils 46 dar.

Der Schlitz 53 ist über eine Durchflussleitung 21, in der sich eine viskosestabile Drosselung 17 befindet, mit der Hauptdruckleitung 11, 13, 6, 19, 20 verbunden (Leitungsverbindung 7). Schlitz 53 stellt einen Eingang E₄₆ des Druckventils 46 dar.

Schlitz 54 ist über eine Durchflussleitung 34, 35 mit dem zweiten Kupplungsaktuator 41 verbunden. Schlitz 54 stellt einen Ausgang A₄₆ des Druckventils 46 dar. Dieser Ausgang A₄₆ ist über eine Steuerleitung 33, in welcher eine viskositätsunabhängige Drosselung 30 angeordnet ist, auf einen als dritten Steuereingang S3₄₆ fungierenden Schlitz 51 rückgekoppelt (Leitungsverbindung 36). Diese Rückkoppelleitung dient der Regelung des am Ausgang A₄₆ einzustellenden zweiten Betätigungsdrucks p₂.

An Schlitz 55 schließt sich ein Rohrende 37 an, welches auf den offenen Hydraulikflüssigkeitsbehälter 1 geführt ist.

Die Funktionsweise der hydraulischen Steuereinrichtung nach der Figur 1 wird im Folgenden anhand der Zeichnungsfigur 2 beschrieben:

### Stufe I

Es wird angenommen, dass mittels des Hauptdruckregelventils 9 ein Hauptdruck p_{Haupt} auf der Hauptdruckleitung 11, 13, 6, 19, 20 eingestellt wird. Das Druckregelventil 23 sei geöffnet. Damit liegt am ersten Kupplungsaktuator 40 der Betätigungsdruck p₁ = p_{Haupt} an. Da in Folge dessen der Kupplungsaktuator 40 betätigt wird, wird an der ersten Kupplung ein maximales Drehmoment M₁ = M_{1, max} übertragen.

Da am Ausgang A₂₃ des Druckregelventils 23 der Betätigungsdruck p₁ = p_{Haupt} anliegt, liegt dieser Druck auch am ersten Steuereingang S1₄₆ des Druckregelventils 46 an. Dieser Druck p₁ = p_{Haupt} wirkt auf die vergleichsweise große Stirnfläche 50 des Kolbens 47.

Am zweiten Steuereingang S2₄₆ liegt derselbe Druck p_{Haupt} an, welcher unmittelbar über die Hauptdruckleitung 11, 13, 6, 19, 20, 22 zur Verfügung gestellt wird. Da die Stirnfläche 49 kleiner ist als die Stirnfläche 50, wird der Kolben 47 in der in der Figur 1 dargestellten Position gehalten.

Dadurch besteht eine Durchlassverbindung zwischen der Hauptdruckleitung 11, 13, 21 und der Ansteuerleitung 34, 35 des zweiten Aktuators 41 über die beiden Schlitze 53, 54 (Eingang E₄₆, Ausgang A₄₆). Am Eingang des zweiten Aktuators 41 liegt demnach der Betätigungsdruck, p₂ = p_{Haupt} an. Da es sich bei dem Kupplungsaktuator 41 um einen Öffner handelt, wird die zweite Kupplung nicht geöffnet. Somit findet auch keine Momentübertragung statt. Das Drehmoment M₂ an der zweiten Kupplung ist demnach 0.

### Stufe II

Wird nun in einer Stufe II das Druckregelventil 23 kontinuierlich geschlossen, so verringert sich auch der Betätigungsdruck p₁ am Ausgang A₂₃ des Druckregelventils 23. Damit reduziert sich auch der an der Stirnfläche 50 anstehende Druck, während der an der Stirnfläche 49 anstehende Druck weiterhin dem Hauptdruck p_{Haupt} entspricht. Entsprechen die jeweiligen Druckverhältnisse p₁:p_{Haupt} dem umgekehrten Flächenverhältnis der Stirnflächen 49, 50, so wird sich der Kolben 47 in die andere Endstellung bewegen. Der Betätigungsdruck p₂ nimmt ab, bis er in der anderen Endstellung des Kolbens 47 den Wert 0 erreicht (Stufe III).

### Stufe III

Bei geschlossenem Druckventil 23 liegt an dessen Ausgang A₂₃ der Betätigungsdruck p₁ = 0 an. Es wird kein Drehmoment übertragen (M₁ = 0). Am Ausgang A₄₆ des Druckventils 46 liegt nunmehr kein Druck an (p₂ = 0). Es wird ein maximales Drehmoment M₂ = M₂, ₘₐₓ übertragen.

Es ist leicht einsichtig, dass der Umschaltpunkt des zweiten Druckventils 46, welcher sich aus der Identität des Verhältnisses aus dem an der Stirnfläche 50 anliegenden Drucks p₁ und dem an der Stirnfläche 49 anliegenden Drucks p_{Haupt} einerseits und den entsprechenden Flächenverhältnissen der Stirnflächen 49, 50 ergibt, durch Veränderung des Hauptdrucks p_{Haupt} möglich ist. Auf diese Weise wird es möglich, den Druck p₂ am zweiten Kupplungsaktuator 41 durch Veränderung des Hauptdrucks p_{Haupt} mittels des Hauptdruckregelventils 9 einzustellen.

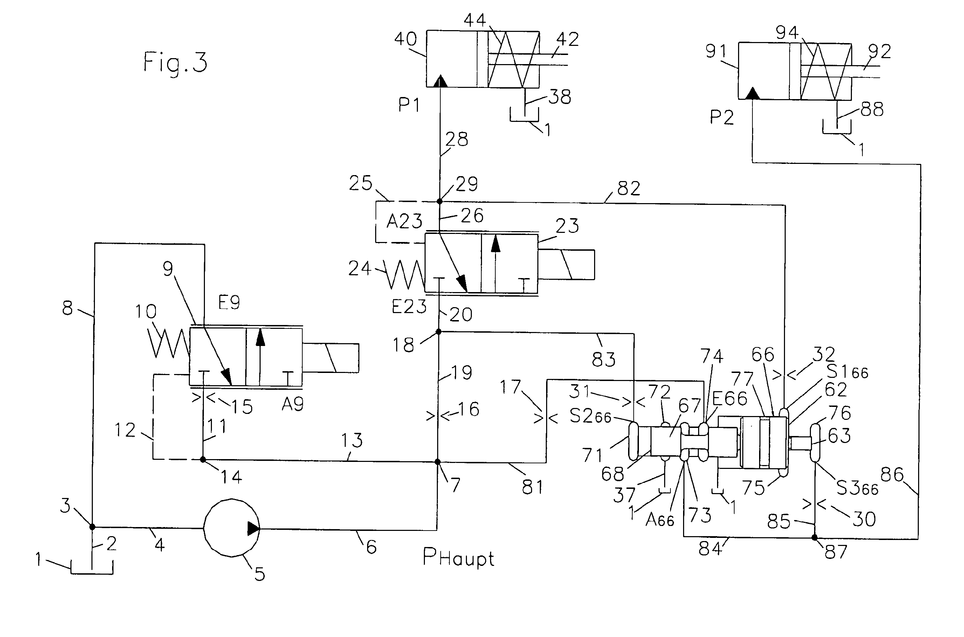

Figur 3 zeigt ein zweites Ausführungsbeispiel einer erfindungsgemäßen hydraulischen Steuereinrichtung zur Ansteuerung eines ersten druckgesteuerten Kupplungsaktuators 40 und eines zweiten druckgesteuerten Kupplungsaktuators 91 einer Doppelkupplung eines Automatikgetriebes.

Die im beiden Ausführungsbeispielen identisch vorliegenden Komponenten sind in den entsprechenden Zeichnungsfiguren mit gleichen Bezugszeichen versehen.

Die beiden Kupplungsaktuatoren 40, 91 sind auch hier durch einfach wirkende Zylinder symbolisiert. Der erste Kupplungsaktuator 40 ist im drucklosen Zustand geöffnet, der zweite Kupplungsaktuator 91 ist im drucklosen Zustand ebenfalls geöffnet. Ein Kolben 42 des ersten Kupplungsaktuators 40 ist demnach entgegen der Kraft einer Feder 44 mittels eines ersten Betätigungsdrucks p₁ in eine geschlossene Stellung verbringbar. In entsprechender Weise ist ein Kolben 93 des zweiten Aktuators 91 durch Druckbeaufschlagung mittels des Betätigungsdrucks p₂ entgegen der Kraft einer Feder 94 in eine geschlossene Stellung verbringbar. Der Vollständigkeit halber sind Rohrenden 38, 88 gezeigt, welche mit einem offenen Hydraulikflüssigkeitsbehälter 1 verbunden sind, über die Überdrücke an den Hydraulikflüssigkeitsbehälter 1 abgegeben werden können.

Die eigentliche hydraulische Ansteuereinrichtung umfasst auch hier drei Druckregelventile 9, 23 und 66.

Das Druckregelventil 9 stellt das Hauptdruckregelventil dar, welches in der vorstehend beschriebenen Weise verschaltet ist und zur Einstellung und Regelung eines Hauptdrucks p_{Haupt} in der Hauptdruckleitung 6, 11, 13, 19, 20, 81, 83 vorgesehen ist. Es wird im Einzelnen auf die obige Beschreibung verwiesen.

Die Verschaltung und Ansteuerung des ersten Kupplungsaktuators 40 mittels eines Druckregelventils 23 ist identisch wie in Ausführungsbeispiel 1 ausgeführt. Im Einzelnen wird daher ebenfalls auf die vorstehende Beschreibung verwiesen.

Anstelle eines baugleichen elektromagnetisch betätigten 2/2-Wege-Ventils, wie es gemäß dem Stand der Technik bekannt ist, ist erfindungsgemäß ein druckbetätigtes Schiebeventil 77 vorgesehen. Dieses Schiebeventil 66 weist ein Steuergehäuse 77 mit sechs Schlitzen 71, 72, 73, 74, 75, und 76 auf. In dem Steuergehäuse 77 ist ein Kolben 67 axial verschieblich zwischen zwei Endstellungen geführt.

Die Figur 3 zeigt eine erste Endstellung, in der der Kolben 67 seine rechte Endposition erreicht hat. Seine linke Endposition hat der Kolben 67 dann erreicht, wenn die mit dem Bezugszeichen 68 gekennzeichnete Stirnfläche des Kolbens 67 an der linken Stirnfläche des Steuergehäuses 77 anliegt. Der Kolben 67 weist Kolbenabschnitte auf, welche einen Durchfluss von Hydraulikflüssigkeit zwischen zwei benachbarten Schlitzen 71, 72, 73, 74, 75, 76 ermöglichen oder unterbinden.

Der Schlitz 75 des Steuergehäuses 77 ist im vorliegenden Ausführungsbeispiel über eine Durchflussleitung 27 mit viskositätsunabhängiger Drosselung 32 mit dem Ausgang A₂₃ des ersten Druckventils 23 verbunden (Leitungsverbindung 29). Der fünfte Schlitz 75 stellt einen ersten Steuereingang S1₆₆ des Druckventils 66 dar.

Der erste Schlitz 71 ist über eine Durchflussleitung 83, in welcher eine viskositätsabhängige Drosselung 31 angeordnet ist, mit der Hauptdruckleistung 6, 11, 13, 19, 20, 81 verbunden (Leistungsverbindung 18). Der erste Schlitz 71 stellt eine zweiten Steuereingang S2₆₆ des Druckventils 66 dar.

Der vierte Schlitz 74 ist über eine Durchflussleitung 81, in der sich eine viskositätsstabile Drosselung 17 befindet, mit der Hauptdruckleitung 6, 11, 13, 19, 20, 81 verbunden (Leitungsverbindung 7). Schlitz 74 stellt einen Eingang E₆₆ des Druckventils 66 dar.

Der dritte Schlitz 73 ist über eine Durchflussleitung 84, 86 mit dem zweiten Kupplungsaktuator 91 verbunden. Schlitz 73 stellt einen Ausgang A₆₆ des Druckventils 66 dar. Dieser Ausgang A₆₆ ist über eine Steuerleitung 85, in welcher eine viskositätsunabhängige Drosselung 30 angeordnet ist, auf den als dritten Steuereingang S3₆₆ fungierenden sechsten Schlitz 76 rückgekoppelt (Leitungsverbindung 87). Diese Rückkoppelleitung 84, 85 dient der Regelung des am Ausgang A₆₆ des Schiebeventils 66 einzustellenden zweiten Betätigungsdrucks p₂.

An Schlitz 72 schließt sich ein Rohrende 37 an, welches auf den offenen Hydraulikflüssigkeitsbehälter 1 geführt ist.

Die Funktionsweise der hydraulischen Steuereinrichtung nach der Figur 3 wird im Folgenden anhand der Zeichnungsfigur 4 beschrieben:

### Stufe I

Es wird angenommen, dass mittels des Hauptdruckregelventils 9 ein Hauptdruck p_{Haupt} auf der Hauptdruckleitung 6, 11, 13, 19, 20, 81, 83 eingestellt wird. Das Druckregelventil 23 sei geöffnet. Damit liegt am ersten Kupplungsaktuator 40 der Betätigungsdruck p₁ = p_{Haupt} an. Da in Folge dessen der Kupplungsaktuator 40 betätigt wird, wird an der ersten Kupplung ein maximales Drehmoment M₁ = M_{1, max} übertragen.

Da am Ausgang A₂₃ des Druckregelventils 23 der Betätigungsdruck p₁ = p_{Haupt} anliegt, liegt dieser Druck p₁ = p_{Haupt} auch am Steuereingang S1₆₆ des Druckregelventils 66 an. Dieser Druck p₁ = p_{Haupt} wirkt auf die vergleichsweise große Stinrfläche 62 des Kolbens 67.

Am zweiten Steuereingang S2₆₆ liegt derselbe Druck p_{Haupt} an, welcher unmittelbar über die Hauptdruckleitung 11, 13, 6, 19, 20, 83 zur Verfügung gestellt wird. Da die Stirnfläche 68 kleiner ist als die Stirnfläche 62, wird der Kolben 67 in die linke Anschlagsposition verbracht.

Dadurch besteht keine Durchlassverbindung zwischen der Hauptdruckleitung 11, 13, 81 und der Ansteuerleitung 84, 86 des zweiten Aktuators 91. Am Eingang des zweiten Aktuators 91 liegt demnach kein Betätigungsdruck, d.h. p₂ = 0 an. Da es sich bei dem Kupplungsaktuator 91 um einen Schließer handelt, wird die zweite Kupplung nicht betätigt. Somit findet auch keine Momentübertragung statt. Das Drehmoment M₂ an der zweiten Kupplung ist demnach M₂ = O.

### Stufe II

Wird nun in einer Stufe II das Druckregelventil 23 kontinuierlich geschlossen, so verringert sich auch der Betätigungsdruck p₁ am Ausgang A₂₃ des Druckregelventils 23. Damit reduziert sich auch der an der Stirnfläche 62 anstehende Druck p = p₁, während der an der Stirnfläche 68 anstehende Druck p weiterhin dem Hauptdruck p = p_{Haupt} entspricht. Entsprechen die jeweiligen Druckverhältnisse p₁:p_{Haupt} dem umgekehrten Flächeverhältnis der Stirnflächen 68, 62, so wird sich der Kolben 67 in die andere Endstellung, nämlich in die in Figur 3 dargestellt, bewegen. Der Betätigungsdruck p₂ nimmt ab, bis er in der anderen Endstellung des Kolbens 47 den Wert p = p_{Haupt} erreicht (Stufe III).

### Stufe III

Bei geschlossenem Druckventil 23 liegt an dessen Ausgang A₂₃ der Betätigungsdruck p₁ = 0 an. Es wird kein Drehmoment übertragen (M₁ = 0). Am Ausgang A₆₆ des Druckventils 66 liegt nunmehr der Hauptdruck an (p₂ = p_{Haupt}) weil über die Schlitze 74, 73 (E₆₆, A₆₆) ein Durchfluss von Hydraulikflüssigkeit möglich ist. Es wird ein maximales Drehmoment M₂ = M_{2, max} übertragen.

Es ist leicht einsichtig, dass der Umschaltpunkt des zweiten Druckventils 66, welcher sich aus der Identität des Verhältnisses aus dem an der Stirnfläche 62 anliegenden Drucks p₁ und dem an der Stirnfläche 68 anliegenden Drucks p_{Haupt} einerseits und den entsprechenden Flächenverhältnissen der Stirnflächen 62, 68 ergibt, durch Veränderung des Hauptdrucks p_{Haupt} möglich ist. Auf diese Weise ist es auch hier möglich, den Druck p₂ am zweiten Kupplungsaktuator 91 durch Veränderung des Hauptdrucks p_{Haupt} mittels des Hauptdruckregelventils 9 einzustellen.

### Bezugszeichenliste

- 1: offener Hydraulikflüssigkeitsbehalter
- 2: Rohrende unterhalb Hydraulikflüssigkeitsspiegel
- 3: Leitungsverbindung
- 4: Durchflussleitung
- 5: Hydropumpe
- 6: Durchflussleitung
- 7: Leitungsverbindung
- 8: Durchflussleitung
- 9: Hauptdruckregelventil (elektromagnetisch betätigtes 2/2-Wege-Ventil)
- 10: Rückholfeder
- 11: Durchflussleitung
- 12: Steuerleitung
- 13: Durchflussleitung
- 14: Leitungsverbindung
- 15: viskosestabile Drosselung
- 16: viskosestabile Drosselung
- 17: viskosestabile Drosselung
- 18: Leitungsverbindung
- 19: Durchflussleitung
- 20: Durchflussleitung
- 21: Durchflussleitung
- 22: Durchflussleitung
- 23: Steuerventil (elektromagnetisch betätigtes 2/2-WegeVentil)
- 24: Rückholfeder
- 25: Steuerleitung
- 26: Durchflussleitung
- 27: Durchflussleitung
- 28: Durchflussleitung
- 29: Leitungsverbindung
- 30: viskositätsabhängige Drosselung
- 31: viskositätsabhängige Drosselung
- 32: viskositätsabhängige Drosselung
- 33: Durchflussleitung
- 34: Durchflussleitung
- 35: Durchflussleitung
- 36: Leitungsverbindung
- 37: Rohrende
- 38: Rohrende
- 39: Rohrende
- 40: einfach wirkender Zylinder für Kupplung und Gangsteller einer ersten Getriebeeingangswelle (Schließer)
- 41: einfach wirkender Zylinder für Kupplung und Gangsteller einer zweiten Getriebeeingangswelle (Öffner)
- 42: einfache Kolbenstange
- 43: einfache Kolbenstange
- 44: Feder
- 45: Feder
- 46: Druckventil
- 47: Kolben
- 48: erste Stirnfläche
- 49: zweite Stirnfläche
- 50: dritte Stirnfläche
- 51: erster Schlitz
- 52: zweiter Schlitz
- 53: dritter Schlitz
- 54: vierter Schlitz
- 55: fünfter Schlitz
- 56: sechster Schlitz
- 57: Steuergehäuse

- 66: Druckventil
- 67: Kolben
- 68: erste Stirnfläche
- 69: zweite Stirnfläche
- 70: dritte Stirnfläche
- 71: erster Schlitz
- 72: zweiter Schlitz
- 73: dritter Schlitz
- 74: vierter Schlitz
- 75: fünfter Schlitz
- 76: sechster schlitz
- 77: Steuergehäuse

- 81: Durchflussleitung
- 82: Durchflussleitung
- 83: Durchflussleitung
- 84: Durchflussleitung
- 85: Durchflussleitung
- 86: Durchflussleitung
- 87: Leitungsverbindung
- 88: Rohrende
- 89: Rohrende

- 91: einfach wirkender Zylinder für Kupplung und Gangsteller einer zweiten Getriebeeingangswelle (Schließer)
- 92: einfache Kolbenstange
- 94: Feder

- p_{Haupt}: Hauptdruck
- p₁: erster hydraulischer Betätigungsdruck
- p₂: zweiter hydraulischer Betätigungsdruck
- p: Druck
- M: Drehmoment
- M₁: Drehmoment an erster Kupplung
- M_{1, max}: maximales Drehmoment an erster Kupplung
- M₂: Drehmoment an zweiter Kupplung
- M₂, ₘₐₓ: maximales Drehmoment an zweiter Kupplung
- t: Zeit

- E₂₃: Eingang des Druckventils 23
- A₂₃: Ausgang des Druckventils 23
- E₄₆: Eingang des Druckventils 46
- A₄₆: Ausgang des Druckventils 46
- S1₄₆: erster Steuereingang des Druckventils 46
- S2₄₆: zweiter Steuereingang des Druckventils 46
- S3₄₆: dritter Steuereingang des Druckventils 46
- E₆₆: Eingang des Druckventils 66
- A₆₆: Ausgang des Druckventils 66
- S1₆₆: erster Steuereingang des Druckventils 66
- S2₆₆: zweiter Steuereingang des Druckventils 66
- S3₆₆: dritter Steuereingang des Druckventils 66
- E₉: Eingang des Hauptdruckregelventils 9
- A₉: Ausgang des Hauptdruckregelventils 9

## Patentansprüche

1. Hydraulische Steuereinrichtung zur Ansteuerung eines ersten druckgesteuerten Aktuators (40) und eines zweiten druckgesteuerten Aktuators (41, 91), insbesondere eines ersten Kupplungsaktuators (40) und eines zweiten Kupplungsaktuators (41, 91),
- mit einem ersten Druckventil (23), vorzugsweise einem ersten Druckregelventil (23), welches einen Eingang (E₂₃) aufweist, an dem ein hydraulischer Hauptdruck (p_{Haupt}) anliegt und welches einen Ausgang (A₂₃) aufweist, an dem ein von dem Druckventil (23) eingestellter erster hydraulischer Betätigungsdruck (p₁) abnehmbar ist, wobei der Ausgang (A₂₃) mit dem ersten Aktuator (40) verbunden ist,
- mit einem zweiten Druckventil (46, 66), vorzugsweise einem zweiten Druckregelventil (46, 66), welches einen Eingang (E₄₆, E₆₆) aufweist, an dem der hydraulische Hauptdruck (p_{Haupt}) anliegt und welches einen Ausgang (A₄₆, A₆₆) aufweist, an dem ein von dem zweiten Druckventil (46, 66) eingestellter zweiter hydraulischer Betätigungsdruck (p₂) abnehmbar ist, wobei der Ausgang (A₄₆, A₆₆) mit dem zweiten Aktuator (41, 91) verbunden ist, wobei
- das zweite Druckventil (46, 66) einen ersten Steuereingang (S1₄₆, S1₆₆) aufweist, dem ein erster hydraulischer Steuerdruck zum Einstellen des zweiten hydraulischen Betätigungsdrucks (p₂) zuführbar ist, und dass
- der Ausgang (A₂₃) des ersten Druckventils (23) mit dem ersten Steuereingang (S1₄₆, S1₆₆) des zweiten Druckventils (46, 66) verbunden ist.
**dadurch gekennzeichnet, dass**
- die Eingänge (E₂₃; E₄₆; E₆₆) der Druckventile (23, 46, 66) ohne Zwischenschaltung weiterer Ventile mit dem Hauptdruck (Pₕₐᵤₚₜ) verbunden sind.

2. Hydraulische Steuereinrichtung nach Anspruch 1,
**dadurch gekennzeichnet, dass**
das zweite Druckventil (46, 66) einen zweiten Steuereingang (S2₄₆, S2₆₆) aufweist, dem ein zweiter hydraulischer Steuerdruck zum Einstellen des zweiten hydraulischen Betätigungsdrucks (p₂) zuführbar ist, wobei an dem zweiten Steuereingang (S2₄₆, S2₆₆) der hydraulische Hauptdruck (p_{Haupt}) anliegt.

3. Hydraulische Steuereinrichtung nach Anspruch 1 oder 2,
**dadurch gekennzeichnet, dass**
ein Hauptdruckventil (9), vorzugsweise ein Hauptdruckregelventil (9), zum Einstellen des Hauptdrucks (p_{Haupt}) vorgesehen ist.

4. Hydraulische Steuereinrichtung nach Anspruch 3,
**dadurch gekennzeichnet, dass**
das erste Druckventil (23) ein Magnetventil ist und/oder dass das Hauptdruckventil (9) ein Magnetventil ist und/oder dass das zweite Druckventil (46, 66) ein Schiebeventil ist.

5. Hydraulische Steuereinrichtung nach einem der vorangegangenen Ansprüche,
**dadurch gekennzeichnet, dass**
der erste Kupplungsaktuator (40) im drucklosen Zustand geöffnet ist, dass der zweite Kupplungsaktuator (41) im drucklosen Zustand geschlossen ist und dass das zweite Druckventil (46) derart ausgebildet ist, dass an dessen Ausgang (A₄₆) der Hauptdruck (p_{Haupt}) anliegt, wenn an dessen erstem Steuereingang (S1₄₆) der Hauptdruck (p_{Haupt}) anliegt.

6. Hydraulische Steuereinrichtung nach Anspruch 5,
**dadurch gekennzeichnet, dass**
dass das zweite Druckventil (46) derart ausgebildet ist, dass dessen Ausgang (A₄₆) drucklos geschaltet ist, wenn der Druck an dessen erstem Steuereingang (S1₄₆) unter einem unterhalb des Hauptdrucks (p_{Haupt}) liegenden Schwellwert liegt.

7. Hydraulische Steuereinrichtung nach einem der Ansprüche 1 bis 4,
**dadurch gekennzeichnet, dass**
der erste Kupplungsaktuator (40) im drucklosen Zustand geöffnet ist, dass der zweite Kupplungsaktuator (91) im drucklosen Zustand geöffnet ist und dass das zweite Druckventil (66) derart ausgebildet ist, dass dessen Ausgang (A₆₆) drucklos geschaltet ist, wenn an dessen erstem Steuereingang (S1₆₆) der Hauptdruck (p_{Haupt}) anliegt.

8. Hydraulische Steuereinrichtung nach Anspruch 7,
**dadurch gekennzeichnet , dass**
dass das zweite Druckventil (66) derart ausgebildet ist, dass an dessen Ausgang (A₆₆) der Hauptdruck (p_{Haupt}) anliegt, wenn der Druck an dessen erstem Steuereingang
(S1₆₆) unter einem unterhalb des Hauptdrucks (p_{Haupt}) liegenden Schwellwert liegt.

9. Verfahren zur hydraulischen Ansteuerung eines ersten druckgesteuerten Aktuators (40) und eines zweiten druckgesteuerten Aktuators (41, 91), insbesondere eines ersten Kupplungsaktuators (40) und eines zweiten Kupplungsaktuators (41, 91), bei dem
- der erste Aktuator (40) mit einem von einem ersten Druckventil (23) ausgehend von einem Hauptdruck (p_{Haupt}) eingestellten ersten Betätigungsdruck (p₁) angesteuert wird und bei dem
- der zweite Aktuator (41, 91) mit einem von einem zweiten Druckventil (46, 66) ausgehend von einem Hauptdruck (p_{Haupt}) eingestellten zweiten Betätigungsdruck (p₂) angesteuert wird, wobei
- das zweite Druckventil (46, 66) zum Einstellen des zweiten hydraulischen Betätigungsdrucks (p₂) von dem vom ersten Druckventil (23) eingestellten ersten Betätigungsdruck (p₁) angesteuert wird,
**dadurch gekennzeichnet, dass** die Eingänge (E₂₃; E₄₆; E₆₆) der Druckventile (23, 46, 66) ohne Zwischenschaltung weiterer Ventile mit dem Hauptdruck (p_{Haupt}) angesteuert werden.

10. Verfahren nach Anspruch 9,
**dadurch gekennzeichnet, dass**
das zweite Druckventil (46, 66) zum Einstellen des zweiten hydraulischen Betätigungsdrucks (p₂) zusätzlich von dem Hauptdruck (p_{Haupt}) angesteuert wird.

11. Verfahren nach Anspruch 10 oder 11,
**dadurch gekennzeichnet, dass**
der Hauptdruck (p_{Haupt}) von einem Hauptdruckventil (9), vorzugsweise einem Hauptdruckregelventil (9), eingestellt wird.

12. Verfahren nach einem der Ansprüche 9 bis 11,
**dadurch gekennzeichnet, dass**
der erste Kupplungsaktuator (40) im drucklosen Zustand geöffnet ist, dass der zweite Kupplungsaktuator (41) im drucklosen Zustand geschlossen ist und dass das zweite Druckventil (46) den zweiten Kupplungsaktuator (41) mit dem Hauptdruck (p_{Haupt}) ansteuert, wenn das zweite Druckventil (46) von dem ersten Druckventil (23) mit dem Hauptdruck (p_{Haupt}) angesteuert wird.

13. Verfahren nach Anspruch 12,
**dadurch gekennzeichnet, dass**
dass der zweite Kupplungsaktuator (41) von dem zweiten Druckventil (46) drucklos geschaltet wird, wenn das zweite Druckventil (46) von dem ersten Druckventil (23) mit einem Druck unter einem unterhalb des Hauptdrucks (p_{Haupt}) liegenden Schwellwert angesteuert wird.

14. Verfahren nach einem der Ansprüche 9 bis 11,
**dadurch gekennzeichnet, dass**
der erste Kupplungsaktuator (40) im drucklosen Zustand geöffnet ist, dass der zweite Kupplungsaktuator (91) im drucklosen Zustand geöffnet ist und dass das zweite Druckventil (66) den zweiten Kupplungsaktuator (91) drucklos schaltet, wenn das zweite Druckventil (66) von dem ersten Druckventil (23) mit dem Hauptdruck (p_{Haupt}) angesteuert wird.

15. Verfahren nach Anspruch 14,
**dadurch gekennzeichnet , dass**
dass das zweite Druckventil (66) den zweiten
Kupplungsaktuator (91) mit dem Hauptdruck (p_{Haupt}) ansteuert, wenn das zweite Druckventil (66) von dem ersten Druckventil (23) mit einem Druck angesteuert wird, der unter einem unterhalb des Hauptdrucks (p_{Haupt}) liegenden Schwellwert liegt.

## Claims

1. Hydraulic control device for controlling a first pressure-controlled actuator (40) and a second pressure-controlled actuator (41, 91), in particular a first clutch actuator (40) and a second clutch actuator (41, 91),
- comprising a first pressure valve (23), preferably a first pressure control valve (23), which comprises an inlet (E₂₃) at which a hydraulic main pressure (pₘₐᵢₙ) is applied and which comprises an outlet (A₂₃) at which a first hydraulic actuating pressure (p₁) adjusted by the pressure valve (23) can be decreased, with the outlet (A₂₃) being connected to the first actuator (40),
- comprising a second pressure valve (46, 66), preferably a second pressure control valve (46, 66), which comprises an inlet (E₄₆, E₆₆) at which the hydraulic main pressure (pₘₐᵢₙ) is applied and which comprises an outlet (A₄₆, A₆₆) at which a second hydraulic actuating pressure (p₂) adjusted by the second pressure valve (46, 66) can be decreased, with the outlet (A₄₆, A₆₆) being connected to the second actuator (41, 91), with
- the second pressure valve (46, 66) comprising a first control inlet (S1₄₆, S1₆₆) to which a first hydraulic control pressure may be supplied for adjusting the second hydraulic actuating pressure (p₂) , and that
- the outlet (A₂₃) of the first pressure valve (23) is connected to the first control inlet (S1₄₆, S1₆₆) of the second pressure valve (46, 66),
**characterised in that**
- the inlets (E_{23;} E_{46;} E₆₆) of the pressure valves (23, 46, 66) are connected to the main pressure (pₘₐᵢₙ) without interconnection of further valves.

2. Hydraulic control device according to claim 1,
**characterised in that** the second pressure valve (46, 66) comprises a second control inlet (S2₄₆, S2₆₆) to which a second hydraulic control pressure can be supplied for adjusting the second hydraulic actuating pressure (p₂), with the hydraulic main pressure (pₘₐᵢₙ) being applied at the second control inlet (S2₄₆, S2₆₆).

3. Hydraulic control device according to claim 1 or 2,
**characterised in that** a main pressure valve (9), preferably a main pressure control valve (9), is provided for adjusting the main pressure (pₘₐᵢₙ).

4. Hydraulic control device according to claim 3,
**characterised in that** the first pressure valve (23) is a solenoid valve and/or **in that** the main pressure valve (9) is a solenoid valve and/or **in that** the second pressure valve (46, 66) is a slide valve.

5. Hydraulic control device according to any one of the preceding claims,
**characterised in that** the first clutch actuator (40) is open in the depressurised state, **in that** the second clutch actuator (41) is closed in the depressurised state, and **in that** the second pressure valve (46) is constructed in such a way that the main pressure (pₘₐᵢₙ) is applied to the outlet (A₄₆) thereof if the main pressure (pₘₐᵢₙ) is applied to the first control inlet (S1₄₆) thereof.

6. Hydraulic control device according to claim 5,
**characterised in that** the second pressure valve (46) is constructed in such a way that the outlet (A₄₆) thereof is switched so as to be depressurised if the pressure at the first control inlet (S1₄₆) thereof is below a threshold lying below the main pressure (pₘₐᵢₙ).

7. Hydraulic control device according to any one of claims 1 to 4,
**characterised in that** the first clutch actuator (40) is open in the depressurised state, **in that** the second clutch actuator (91) is open in the depressurised state, and **in that** the second pressure valve (66) is constructed in such a way that the outlet (A₆₆) thereof is switched so as to be depressurised if the main pressure (pₘₐᵢₙ) is applied at the first control inlet (S1₆₆) thereof.

8. Hydraulic control device according to claim 7,
**characterised in that** the second pressure valve (66) is constructed in such a way that the main pressure (pₘₐᵢₙ) is applied at the outlet thereof (A₆₆) if the pressure at the first control inlet thereof (S1₆₆) is below a threshold lying below the main pressure (pₘₐᵢₙ).

9. Method for hydraulically controlling a first pressure-controlled actuator (40) and a second pressure-controlled actuator (41, 91), in particular a first clutch actuator (40) and a second clutch actuator (41, 91), in which
- the first actuator (40) is controlled with a first actuating pressure (p₁) adjusted by a first pressure valve (23) starting from a main pressure (pₘₐᵢₙ) and in which
- the second actuator (41, 91) is controlled with a second actuating pressure (p₂) adjusted by a second pressure valve (46, 66) starting from a main pressure (pₘₐᵢₙ), with
- the second pressure valve (46, 66) being controlled by the first actuating pressure (p₁) adjusted by the first pressure valve (23) for adjusting the second hydraulic actuating pressure (p₂),
**characterised in that**
the inlets (E₂₃; E_{46;} E₆₆) of the pressure valves (23, 46, 66) are controlled by the main pressure (pₘₐᵢₙ) without interconnection of further valves.

10. Method according to claim 9,
**characterised in that** the second pressure valve (46, 66) is also controlled by the main pressure (pₘₐᵢₙ) for adjusting the second hydraulic actuating pressure (p₂).

11. Method according to claim 10 or 11,
**characterised in that** the main pressure (pₘₐᵢₙ) is adjusted by a main pressure valve (9), preferably a main pressure control valve (9).

12. Method according to any one of claims 9 to 11,
**characterised in that** the first clutch actuator (40) is open in the depressurised state, **in that** the second clutch actuator (41) is closed in the depressurised state, and **in that** the second pressure valve (46) controls the second clutch actuator (41) with the main pressure (pₘₐᵢₙ) if the second pressure valve (46) is controlled by the first pressure valve (23) with the main pressure (pₘₐᵢₙ).

13. Method according to claim 12,
**characterised in that** the second clutch actuator (41) is switched by the second pressure valve (46) so as to be depressurised if the second pressure valve (46) is controlled by the first pressure valve (23) with a pressure below a threshold lying below the main pressure (pₘₐᵢₙ).

14. Method according to any one of claims 9 to 11,
**characterised in that** the first clutch actuator (40) is open in the depressurised state, **in that** the second clutch actuator (91) is open in the depressurised state, and **in that** the second pressure valve (66) switches the second clutch actuator (91) so as to be depressurised if the second pressure valve (66) is controlled by the first pressure valve (23) with the main pressure (pₘₐᵢₙ).

15. Method according to claim 14,
**characterised in that** the second pressure valve (66) controls the second clutch actuator (91) with the main pressure (pₘₐᵢₙ) if the second pressure valve (66) is controlled by the first pressure valve (23) with a pressure which is below a threshold lying below the main pressure (pₘₐᵢₙ).

## Revendications

1. Dispositif de commande hydraulique pour exciter un premier actionneur commandé en pression (40) et un second actionneur commandé en pression (41, 91), en particulier un premier actionneur d'embrayage (40) et un second actionneur d'embrayage (41, 91), comprenant :
une première soupape de pression (23), de préférence une première soupape de régulation de pression (23) qui présente une entrée (E₂₃) sur laquelle est appliquée une pression hydraulique principale (p_{Ppale}) et qui présente une sortie (A₂₃) sur laquelle une première pression d'actionnement hydraulique (p₁) ajustée par la soupape de pression (23) peut être retirée, la sortie (A₂₃) étant reliée au premier actionneur (40) ;
une seconde soupape de pression (46, 66), de préférence une seconde soupape de régulation de pression (46, 66), qui présente une entrée (E₄₆, E₆₆) sur laquelle est appliquée la pression hydraulique principale (p_{Ppale}) et qui présente une sortie (A₄₆, A₆₆) sur laquelle une seconde pression d'actionnement hydraulique (p₂) ajustée par la soupape de pression (46, 66) peut être retirée, la sortie (A₄₆, A₆₆) étant reliée au second actionneur, sachant que :
la seconde soupape de pression (46, 66) présente une première entrée de commande (S1₄₆, S1₆₆) vers laquelle peut être amenée une première pression de commande hydraulique pour ajuster la seconde pression d'actionnement hydraulique (P₂) ; et
la sortie (A₂₃) de la première soupape de pression (23) est reliée à la première entrée de commande (S1₄₆, S1₆₆) de la seconde soupape de pression (46, 66),
**caractérisé en ce que** les entrées (E₂₃, E₄₆, E₆₆) des soupape de pression (23, 46, 66) sont reliées à la pression principale (p_{Ppale}) sans mise en circuit intermédiaire d'autres soupapes.

2. Dispositif de commande hydraulique selon la revendication 1, **caractérisé en ce que** la seconde soupape de pression (46, 66) présente une seconde entrée de commande (S2₄₆, S2₆₆) vers laquelle peut être amenée une seconde pression de commande hydraulique pour ajuster la seconde pression d'actionnement hydraulique (p₂), la pression principale (p_{Ppale}) étant appliquée sur la seconde entrée de commande (S2₄₆, S2₆₆).

3. Dispositif de commande hydraulique selon l'une ou l'autre des revendications 1 et 2, **caractérisé en ce qu'**une soupape de pression principale (9), de préférence une soupape de régulation de pression principale (9), est prévue pour ajuster la pression principale (p_{Ppale}).

4. Dispositif de commande hydraulique selon la revendication 3, **caractérisé en ce que** la première soupape de pression (23) est une soupape magnétique et/ou **en ce que** la soupape de pression principale (9) est une soupape magnétique et/ou **en ce que** la seconde soupape de pression (46, 66) est une soupape à coulisse.

5. Dispositif de commande hydraulique selon l'une des revendications précédentes, **caractérisé en ce que** le premier actionneur d'embrayage (40) est ouvert dans l'état sans pression, **en ce que** le second actionneur d'embrayage (41) est fermé dans l'état sans pression et **en ce que** la seconde soupape de pression (46) est réalisée de sorte que la pression principale (p_{Ppale}) est appliquée sur sa sortie (A₄₆) lorsque la pression principale (p_{Ppale}) est appliquée sur sa première entrée de commande (S1₄₆).

6. Dispositif de commande hydraulique selon la revendication 5, **caractérisé en ce que** la seconde soupape de pression (46) est réalisée de sorte que sa sortie (A₄₆) est commutée sur l'état sans pression lorsque la pression sur sa première entrée de commande (S1₄₆) est inférieure à une valeur de seuil se trouvant en dessous de la pression principale (p_{Ppale}).

7. Dispositif de commande hydraulique selon l'une des revendications 1 à 4, **caractérisé en ce que** le premier actionneur d'embrayage (40) est ouvert dans l'état sans pression, **en ce que** le second actionneur d'embrayage (91) est fermé dans l'état sans pression et **en ce que** la seconde soupape de pression (66) est réalisée de sorte que sa sortie (A₆₆) est commutée sur l'état sans pression lorsque la pression principale (p_{Ppale}) est appliquée sur sa première entrée de commande (S1₆₆).

8. Dispositif de commande hydraulique selon la revendication 7, **caractérisé en ce que** la seconde soupape de pression (66) est réalisée de sorte que la pression principale (p_{Ppale}) est appliquée sur sa sortie (A₆₆) lorsque la pression sur sa première entrée de commande (S1₆₆) est inférieure à une valeur de seuil se trouvant en dessous de la pression principale (p_{Ppale}).

9. Procédé pour l'excitation hydraulique d'un premier actionneur commandé en pression (40) et d'un second actionneur commandé en pression (41, 91), en particulier d'un premier actionneur d'embrayage (40) et d'un second actionneur d'embrayage (41, 91), dans lequel :
le premier actionneur (40) est excité avec une première pression d'actionnement (p₁) ajustée par une première soupape de pression (23) en partant d'une pression principale (p_{Ppale}) ; et
le second actionneur (41, 91) est excité avec une seconde pression d'actionnement (p₂) ajustée par une seconde soupape de pression (46, 66) en partant d'une pression principale (p_{Ppale}) ; sachant que :
la seconde soupape de pression (46, 66) est excitée par la première pression d'actionnement (p₁) ajustée par la première soupape de pression (23) pour ajuster la seconde pression d'actionnement hydraulique (p₂),
**caractérisé en ce que** les entrées (E₂₃, E₄₆, E₆₆) des soupapes de pression (23, 46, 66) sont excitées avec la pression principale (p_{Ppale}) sans mise en circuit intermédiaire d'autres soupapes.

10. Procédé selon la revendication 9, **caractérisé en ce que** la seconde soupape de pression (46, 66) est excitée en supplément par la pression principale (p_{Ppale}) pour ajuster la seconde pression d'actionnement hydraulique (p₂).

11. Procédé selon l'une ou l'autre des revendications 10 et 11, **caractérisé en ce que** la pression principale (p_{Ppale}) est ajustée par une soupape de pression principale (9), de préférence une soupape de régulation de pression principale (9).

12. Procédé selon l'une des revendications 9 à 11, **caractérisé en ce que** le premier actionneur d'embrayage (40) est ouvert dans l'état sans pression, **en ce que** le second actionneur d'embrayage (41) est fermé dans l'état sans pression et **en ce que** la seconde soupape de pression (46) excite le second actionneur d'embrayage (41) avec la pression principale (p_{Ppale}) lorsque la seconde soupape de pression (46) est excitée par la première soupape de pression (23) avec la pression principale (p_{Ppale}).

13. Procédé selon la revendication 12, **caractérisé en ce que** le second actionneur d'embrayage (41) est commuté sur l'état sans pression par la seconde soupape de pression (46) lorsque la seconde soupape de pression (46) est excitée par la première soupape de pression (23) avec une pression qui est inférieure à une valeur de seuil se trouvant en dessous de la pression principale (p_{Ppale}).

14. Procédé selon l'une des revendications 9 à 11, **caractérisé en ce que** le premier actionneur d'embrayage (40) est ouvert dans l'état sans pression, **en ce que** le second actionneur d'embrayage (91) est fermé dans l'état sans pression et **en ce que** la seconde soupape de pression (66) commute le second actionneur d'embrayage (91) sur l'état sans pression lorsque la seconde soupape de pression (66) est excitée par la première soupape de pression (23) avec la pression principale (p_{Ppale}).

15. Procédé selon la revendication 14, **caractérisé en ce que** la seconde soupape de pression (66) excite le second actionneur d'embrayage (91) avec la pression principale (p_{Ppale}) lorsque la seconde soupape de pression (66) est excitée par la première soupape de pression (23) avec une pression qui est inférieure à une valeur de seuil se trouvant en dessous de la pression principale (p_{Ppale}).
